# EUROPÄISCHE PATENTSCHRIFT

(11) **EP 1 410 673 B1**
(45) Veröffentlichungstag und Bekanntmachung des Hinweises auf die Patenterteilung: **31.10.2007**
(21) Anmeldenummer: 02735084.2
(22) Anmeldetag: 04.06.2002
(51) Int. Cl.: H04Q 7/38

(54) **MOBILSTATION UND VERFAHREN ZUM ZUGREIFEN AUF EINEN DIENST IM BEREITSCHAFSMODUS**
MOBILE STATION AND METHOD FOR SERVICE ACTIVATION IN STANDBY MODE
STATION MOBILE D'UN SYSTEME DE COMMUNICATION MOBILE ET PROCEDE D'ACCES A UN SERVICE ET / OU A UN ENREGISTREMENT DE DONNEES EN MODE D'ATTENTE DE LA STATION MOBILE

(30) Priorität: 20.07.2001 DE 10135527
(43) Veröffentlichungstag der Anmeldung: 21.04.2004
(73) Patentinhaber: Infineon Technologies AG, 81669 München (DE)
(72) Erfinder: WENZEL, Dietmar, 81549 München (DE); HAUSNER, Josef, 82110 Germering (DE)
(74) Vertreter: Graf Lambsdorff, Matthias
(86) Internationale Anmeldenummer: PCT/DE2002/002034
(87) Internationale Veröffentlichungsnummer: WO 2003/013170

(56) Entgegenhaltungen:
- EP-A- 0 792 056
- EP-A- 1 107 623
- WO-A-99/44380
- US-B1- 6 216 014

## Beschreibung

Die Erfindung betrifft eine Mobilstation eines Mobilkommunikationssystems und ein Verfahren zum Zugreifen auf einen Dienst und/oder einen Datensatz im Bereitschaftsmodus der Mobilstation.

In einer Mobilstation die üblicherweise aus einem Sende- und Empfangsgerät und einem Identifikationsmodul besteht, sind meistens persönliche, benutzerbezogene Datensätze verschiedenster Datenkategorien gespeichert (zum Beispiel Telefonnummern, Adressen, Termine, Texte und Spachaufzeichnungen). Des Weiteren werden Dienste (zum Beispiel Internet, E-Mail) bereitgestellt. Im ausgeschalteten Zustand der Mobilstation sind die Datensätze und Dienste im allgemeinen vor unberechtigtem Zugriff und unberechtigter Nutzung geschützt sowie ein unberechtigter Verbindungsaufbau unterbunden, da nach dem Stand der Technik meistens eine Personal Identification Number (PIN) vom Benutzer über die Tastatur in die Mobilstation eingegeben werden muss, um die Mobilstation einzuschalten beziehungsweise deren Bereitschaftsmodus zu aktivieren. So ist es beispielsweise bei Mobiltelefonen üblich, dass nach Inbetriebnahme dieser Geräte eine in den meisten Fällen vierstellige PIN abgefragt wird, ohne deren richtige Eingabe keine Einbuchung ins Netz des Netzbetreibers erfolgt. Hierdurch wird sichergestellt, dass abgeschaltete Mobiltelefone wegen der ohne vorherigen PIN-Eingabe nicht gegebenen Benutzungsmöglichkeit, für Diebe reizlos sind.

Auch wenn diese Sicherungsfunktion bei Mobiltelefonen, die von den Benutzern nicht ständig mitgeführt werden, ihre Berechtigung hat, wird es doch zum Teil als lästig empfunden, zur Individualisierung einer befugten Nutzung die PIN einzugeben, um das Mobiltelefon zunächst in den Bereitschaftszustand zu bringen. Die PIN bietet daher den Schutz, dass eine Mobilstation entweder nur im ausgeschalteten Zustand gesichert ist oder im Bereitschaftszustand allgemein zur Verfügung steht. Dadurch besteht besonders dann die Gefahr einer unberechtigten Nutzung oder eines Diebstahls, wenn die Mobilstation im Bereitschaftszustand unbeaufsichtigt vom berechtigten Nutzer ist.

Ist die Mobilstation im Bereitschaftsmodus, d.h. es kann entweder eine Verbindung zur Basisstation von der Mobilstation initiiert werden oder die Mobilstation ist empfangsbereit für eine von der Basisstation initiierte Verbindung, ist bisher kein personenbezogener Schutz der Daten oder Dienste, die über die Mobilstation bereitgestellt werden, möglich.

Bei einer bekannten Vorrichtung (DE 299 15 915 U1) ist der Zugriff auf einen Dienst und/oder einen Datensatz im Bereitschaftsmodus der Mobilstation dadurch gesichert, dass die Mobilstation einen eingebauten Sender mit Miniempfänger aufweist. Der eingebaute Sender arbeitet auf Funkbasis und beeinträchtigt in keiner Weise die Funktion des Mobiltelefons solange der Miniempfänger im Empfangsbereich liegt. Der Miniempfänger befindet sich dabei am Schlüsselbund des Mobiltelefonbesitzers. Entfernt sich nun der Besitzer von seinem Mobiltelefon um mehr als zwei bis fünf Meter, gibt der Miniempfänger sofort einen akustischen und visuellen Alarm, im gleichen Moment wird die Tastatur des Mobiltelefons gesperrt. Kommt der Mobiltelefonbesitzer wieder in Sendereichweite, wird die Tastatur sofort entsperrt und steht wieder zur Verfügung. Um das Sicherheitssystem zu deaktivieren, wird der Miniempfänger abgeschaltet, dadurch wird die Tastatur zwar gesperrt, kann aber mittels einer Codenummer, die jedem Mobiltelefon zur Verfügung steht, wieder entsperrt werden.

Die üblicherweise implementierte Tastatursperre, die aus dem Stand der Technik in bereits mehreren Ausführungsformen bekannt ist, stellt keine personenbezogene Schutzmöglichkeit dar, sondern lediglich einen bestenfalls gerätespezifischen Schutzmechanismus vor unbeabsichtigter Tastaturbetätigung.

Oftmals wird die Mobilstation längere Zeit im Bereitschaftszustand betrieben und wird an Orten aufbewahrt, die mehreren Personen zugänglich sind. Insbesondere in solchen Situationen oder wenn die Mobilstation im Bereitschaftszustand entwendet wurde, ist ein Schutz gegen Mißbrauch und unberechtigten Zugriff auf Dienste und/oder Datensätze sinnvoll.

EP 1 107 623 A beschreibt ein Verfahren, bei dem unter Verwendung verschiedener Codes auf verschiedene Datensätze, die in einem Speicher gespeichert sind, zugegriffen wird.

Aufgabe der Erfindung ist es, eine Mobilstation eines Mobilkommunikationssystems und ein Verfahren zum Zugreifen auf einen Dienst und/oder einen Datensatz, der einem Nutzer über die Mobilstation angeboten wird und von dem Nutzer abgerufen werden kann, zu schaffen, bei der beziehungsweise bei dem mit hoher Sicherheit eine unberechtigte Nutzung des Dienstes und/oder des Datensatzes im Bereitschaftsmodus der Mobilstation verhindert werden kann.

Diese Aufgabenstellung wird erfindungsgemäß durch die Merkmale der unabhängigen Ansprüche gelöst.

Eine Mobilstation eines Mobilkommunikationssystems weist eine Sende- und Empfangseinheit zum Übertragen von elektrischen Signalen zwischen der Mobilstation und einer oder mehreren weiteren Mobilstationen über eine oder mehrere Basisstationen oder zwischen der Mobilstation und einer oder mehreren Basisstation auf. Desweiteren weist die Mobilstation ein in die Mobilstation einsetzbares Identifikationsmodul (SIM) zum Überprüfen einer Nutzungsberechtigung der Mobilstation durch einen Nutzer und zum Aktivieren des Bereitschaftsmodus der Mobilstation, welche zumindest einen Dienst und/oder Datensatz bereitstellt der von einem Nutzer abrufbar ist, auf.

Erfindungsgemäß ist dem bereitgestellten Dienst und/oder Datensatz eine charakteristische Zugriffskennung zugeordnet. Die Zugriffskennung ist dabei durch einen individuellen Sicherungscode gesichert. Die Mobilstation weist dazu ein Sicherungsmittel auf, dass zumindest im Bereitschaftsmodus der Mobilstation aktiv ist. Durch Eingabe und/oder Übertragung des Sicherungscodes in beziehungsweise an das Sicherungsmittel ist die Zugriffskennung aktivierbar oder deaktivierbar. Indem die Zugriffskennung aktiviert oder deaktiviert ist, ist der Zugriff auf den Dienst und/oder den Datensatz gesperrt beziehungsweise freigegeben.

Dadurch kann erreicht werden, dass der Zugriff auf den Dienst und/oder Datensatz der über die Mobilstation bereitgestellt wird, für einen unberechtigten Nutzer verhindert wird. Die Mobilstation ist dadurch auch im Bereitschaftsmodus, wenn sie vom berechtigten Nutzer unbeaufsichtigt ist, vor unberechtigtem Zugriff gesichert.

Vorteilhafte Ausgestaltungen der Erfindung sind in den Unteransprüchen angegeben.

Es kann dabei vorgesehen sein, dass die Zugriffskennung eine oder mehrere Zahlen und/oder einen oder mehrere Buchstaben und/oder ein oder mehrere Sonderzeichen aufweist.

Dadurch kann erreicht werden, dass für die Zugriffskennung eine Vielzahl an Kombinationen von Zeichen, Buchstaben und Sonderzeichen möglich sind und somit eine erhöhte Sicherheit gegen unberechtigten Zugriff auf einen Dienst und/oder Datensatz gewährleistet ist.

Desweiteren kann vorgesehen sein, dass der Sicherungscode gleich einem PIN-Code ist, der zum Aktivieren des Bereitschaftsmodus der Mobilstation eingegeben wird. Der Sicherungscode kann aber auch so ausgeführt sein, dass der Code ein oder mehrere alphanumerische Zeichen aufweist und somit aus zumindest einem Buchstaben oder zumindest einer Ziffer besteht. Eine weitere Ausführungsform ist dadurch gegeben, dass der Sicherungscode ein oder mehrere graphische Zeichen und/oder ein oder mehrere graphische Symbole aufweist.

Dadurch stehen dem Nutzer eine Vielzahl an Kombinationsmöglichkeiten für den Sicherungscode zur Verfügung und eine möglichst einfache Gestaltung des Sicherungscodes kann gewährleistet werden. Zusätzlich kann dadurch die Wahrscheinlichkeit reduziert werden, dass ein unberechtigter Nutzer den Sicherheitscode durch einfaches Ausprobieren herausfindet.

Neben diesen Ausführungsformen des Sicherungscodes kann als weitere Alternative ein biometrisches Merkmal eines berechtigten Nutzers der Mobilstation als Sicherungscode dienen. Als biometrisches Merkmal kann dabei beispielsweise ein Fingerabdruck herangezogen werden. Es kann aber auch das Augenbild des berechtigten Nutzers als biometrisches Kennzeichen herangezogen werden.

Der Sicherungscode kann aber auch ein akustisches Merkmal des berechtigten Nutzers, beispielsweise die gesprochene Sprache, sein.

Dadurch kann erreicht werden, dass der Sicherungscode durch ein individuelles Merkmal des berechtigten Nutzers charakterisiert ist. Ein weiterer Vorteil dabei ist, dass das Eingeben und Überprüfen des biometrischen Merkmals relativ schnell erfolgt und das keine Erfordernis seitens des berechtigten Nutzers besteht, sich ein oder mehrere Kombinationen aus Zeichen, Ziffern, Buchstaben und dergleichen merken zu müssen.

Eine weitere Möglichkeit der Ausgestaltung des Sicherungscodes ist dadurch gegeben, dass der Sicherungscode ein elektrisches Signal ist, das drahtlos an die Mobilstation übertragen wird.

Es kann auch vorgesehen sein, den Sicherungscode als Strichcode oder als Magnetcode, beispielsweise auf einer Chipkarte, auszuführen.

Dadurch ist ebenfalls die Möglichkeit einer relativ schnellen Eingabe oder Übertragung des Sicherungscodes an die Mobilstation, sowie eine hohe Sicherheit der Dienste und/oder Datensätze gegen unberechtigte Nutzung gegeben.

Selbstverständlich ist es auch ohne weiteres möglich, ein Sicherungscode derart zu gestalten, dass er eine beliebige Kombination aus den oben angeführten Ausführungsformen darstellt.

Abhängig von der erwünschten Absicherung eines Zugriffs auf Dienste und/oder Datensätze kann somit die Wahrscheinlichkeit eines unberechtigten Zugriffs weiter vermindert werden.

Abhängig von der Gestaltung des Sicherungscodes weist die Mobilstation entsprechende Sicherungsmittel zur Eingabe und/oder Übertragung der Sicherungscodes in beziehungsweise an die Mobilstation auf. Zur Eingabe des Sicherungscodes kann dabei vorgesehen sein, dass die Mobilstation eine Tastatur und/oder eine berührungssensitive Anzeigefläche, beispielsweise ein Touch-Screen oder ein Touch-Pad, aufweist. Desweiteren kann ein Sensor zum Detektieren der biometrischen oder akustischen Merkmale des berechtigten Nutzers vorgesehen sein.

Zum Übertragen des als elektrisches Signal ausgeführten Sicherungscodes kann ein tragbarer Transponder vorgesehen sein, der durch das Betätigen durch den berechtigten Nutzer das elektrische Signal aussendet, welches von einem entsprechendem Empfänger in der Mobilstation empfangen und auf seine Berechtigung hin überprüft werden kann.

Die Mobilstation kann auch eine Scannervorrichtung aufweisen, mittels der, als Strichcode oder Magnetcode auf einer Chipkarte ausgeführte Sicherungscode abgetastet wird. Die Scannervorrichtung kann dabei in der Mobilstation angeordnet sein oder durch eine elektrische Verbindung mit der Mobilstation verbunden sein.

Werden über die Mobilstation mehrere Dienste und/oder Datensätze einem Nutzer angeboten, kann vorteilhafterweise vorgesehen sein, dass eine Zugriffskennung mehreren Diensten und/oder Datensätzen zugeordnet wird. Es ist auch möglich, dass jedem Dienst und/oder Datensatz mehrere Zugriffskennungen entsprechend einer Hierarchiestruktur zugeordnet sind. Sowohl die Zuordnung als auch die Gestaltung der Hierarchiestruktur kann dabei zumindest teilweise von einem berechtigten Nutzer individuell verändert werden.

Dadurch kann erreicht werden, dass der berechtigte Nutzer die Dienste und/oder Datensätze entsprechend seiner individuellen Prioritätenliste hinsichtlich der Wichtigkeit eines Schutzes vor unberechtigtem Zugriff der Dienste und/oder Datensätze sichern kann.

Vorteilhafterweise weist die Mobilstation einen Timer auf, der nach Ablauf einer festlegbaren Zeitdauer, innerhalb der keine Dienste und/oder Datensätze im Bereitschaftsmodus der Mobilstation von einem Nutzer abgefragt werden, Zugriffscodes automatisch aktiviert. Die automatisch zu aktivierenden Zugriffscodes können dabei ebenfalls vom berechtigten Nutzer vorab festgelegt werden.

Damit kann auch dann ein unberechtigter Zugriff verhindert werden, wenn ein berechtigter Nutzer vergisst, explizit bestimmte Dienste und/oder Datensätze im Bereitschaftsmodus der Mobilstation zu sichern.

Alle vom Benutzer eingegebenen Zugriffskennungen und zugeordneten Sicherungscodes können dabei in der Mobilstation und/oder im Identifikationsmodul (SIM) der Mobilstation gespeichert oder verschlüsselt gespeichert werden. Damit kann erreicht werden, dass eine vom berechtigten Nutzer eingestellte Zuordnung der Zugriffskennungen und Sicherungscodes so lange besteht, bis Sie vom berechtigten Nutzer verändert wird. Die Einstellungen bleiben daher auch im ausgeschalteten Zustand der Mobilstation erhalten.

Unabhängig davon, wie viele Dienste und/oder Datensätze, die einem Nutzer im Bereitschaftsmodus der Mobilstation bereitgestellt werden, durch aktivierte Zugriffskennungen gesperrt sind, können ankommende Verbindungen empfangen und von einem Nutzer entgegengenommen werden.

Ausführungsbeispiele der Erfindung werden im folgenden anhand der schematischen Zeichnungen näher erläutert. Es zeigen:
- Fig. 1: einen Ablauf eines erfindungsgemäßen Verfahrens,
- Fig. 2: eine Darstellung einer Zuordnung von Diensten und/oder Datensätzen zu charakteristischen Zugriffskennungen und Sicherungscodes,
- Fig. 3: ein weiteres Ausführungsbeispiel einer Zuordnung von Diensten und/oder Datensätzen zu charakteristischen Zugriffskennungen und Sicherungscodes,
- Fig. 4: eine Mobilstation mit einer Tastatur und einem Display,
- Fig. 5: eine Mobilstation mit einer Scannervorrichtung,
- Fig. 6: eine Mobilstation mit einem Sensor zur Detektion eines Fingerabdrucks eines Nutzers,
- Fig. 7: eine Mobilstation mit einem Empfänger für elektrische Signale und einem tragbaren Transponder, und
- Fig. 8: eine Mobilstation mit einem Sensor zur Detektion eines Augenbildes eines Nutzers und einem Sensor zur Aufzeichnung von Sprachsignalen eines Nutzers.

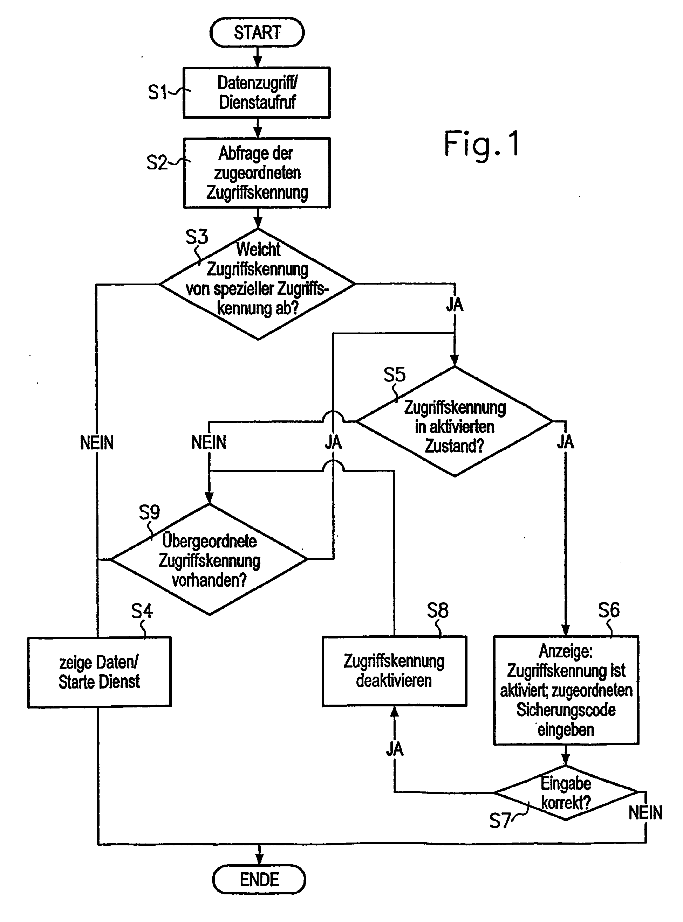

Ein erfindungsgemäßes Verfahren zum Zugreifen auf einen Dienst und/oder einen Datensatz, welche im Bereitschaftsmodus einer Mobilstation einem Nutzer bereitgestellt werden, wird dadurch gestartet, dass von einem Nutzer der Mobilstation versucht wird, einen Dienst und/oder einen Datensatz gemäß Verfahrensschritt S1 abzurufen (Fig. 1). Unter dem Bereitschaftsmodus der Mobilstation wird dabei der Betriebszustand verstanden, den die Mobilstation einnimmt, wenn eine korrekte Identifizierung des Nutzers, beispielsweise durch Eingabe einer Personal Identification Number (PIN) erfolgt ist und die Dienste und/oder Datensätze über die Mobilstation bereitgestellt werden.

Indem der Nutzer versucht einen Dienst und/oder Datensatz zu starten oder abzufragen, wird vor der Freigabe des Zugriffs eine diesem Dienst und/oder diesem Datensatz zugeordnete charakteristische Zugriffskennung gemäß Verfahrensschritt S2 abgefragt. Das Zuordnen der charakteristischen Zugriffskennung zu dem Dienst und/oder Datensatz wird dabei durch den berechtigten Nutzer durchgeführt. Eine einzige Zugriffskennung kann auch mehreren unterschiedlichen Diensten und/oder Datensätzen zugeordnet werden, wodurch eine Gruppenbildung möglich ist. Das Zuordnen kann zu beliebigen Zeitpunkten während des Bereitschaftsmodus der Mobilstation durchgeführt werden und wird in einem Identifikationsmodul (SIM) und/oder in der Mobilstation gespeichert. Eine durch einen berechtigten Nutzer eingestellte Zuordnung der charakteristischen Zugriffskennungen zu den Diensten und/oder Datensätzen bleibt auch im abgeschalteten Zustand der Mobilstation gespeichert und wird erst durch eine neue Zuordnung der Zugriffskennungen zu den Diensten und/oder Datensätzen durch den berechtigten Nutzer verändert.

Beim Abfragen der Zugriffskennung wird zunächst überprüft, ob die zugeordnete charakteristische Zugriffskennung einer speziellen Zugriffskennung gemäß Verfahrensschritt S3 entspricht. Diese spezielle Zugriffskennung wird vorab durch Eingabe in die Mobilstation durch einen berechtigten Nutzer allen denjenigen Diensten und/oder Datensätzen zugeordnet, deren Inhalt oder deren Nutzung auch einem unberechtigten Nutzer zugänglich sein kann. Diese spezielle Zugriffskennung wird dabei weder in einen aktivierten noch in einen deaktivierten Zustand gesetzt. Daher wird der speziellen Zugriffskennung auch kein individueller Sicherungscode zugeordnet, mit dem ein Aktivieren oder Deaktivieren der speziellen Zugriffskennung durchgeführt wird.

Wird erkannt, dass dem Dienst und/oder Datensatz diese spezielle Zugriffskennung zugeordnet ist, so wird der Dienst und/oder der Datensatz ohne weitere Sicherungsprüfung unmittelbar für den Nutzer gemäß Verfahrensschritt S4 zugänglich.

Wird jedoch eine von der speziellen Zugriffskennung abweichende Zugriffskennung erkannt, so wird nachfolgend überprüft, in welchem Zustand, ob im aktivierten oder deaktivierten, sich diese Zugriffskennung befindet (Verfahrensschritt S5). Bis auf die spezielle Zugriffskennung werden alle, den jeweiligen Diensten und/oder Datensätzen zugeordneten charakteristischen Zugriffskennungen entweder in den aktivierten oder den deaktivierten Zustand gesetzt.

Befindet sich die charakteristische Zugriffskennung im aktivierten Zustand, so wird ein Zugriff auf den Dienst und/oder Datensatz verhindert. Ein Nutzer wird gemäß Verfahrensschritt S6 aufgefordert, einen Sicherungscode in die Mobilstation einzugeben oder an die Mobilstation zu übertragen. Dieser Sicherungscode ist dabei speziell dieser charakteristischen Zugriffskennung zugeordnet. Erst wenn der dieser Zugriffskennung zugeordnete Sicherungscode korrekt in die Mobilstation eingegeben beziehungsweise an die Mobilstation übertragen wird, wird die Zugriffskennung deaktiviert. Wird ein falscher Sicherungscode gemäß Verfahrensschritt S7 eingegeben, wird ein Überprüfen des Sicherungscodes abgebrochen und ein Zugriff auf den entsprechenden Dienst und/oder Datensatz verhindert.

Es kann vorgesehen sein, dass bei falschem oder unkorrektem Eingeben ein Nutzer erneut aufgefordert wird, den korrekten Sicherungscode einzugeben und erst bei zwei- oder mehrmaliger unkorrekter Eingabe und/oder Übertragung ein Abbrechen des Überprüfens des Sicherungscodes erfolgt.

Ist der Sicherungscode korrekt in die Mobilstation eingegeben oder an die Mobilstation übertragen, so wird die charakteristische Zugriffskennung gemäß Verfahrensschritt S8 deaktiviert und der Zugriff auf den Dienst und/oder Datensatz freigegeben.

Gemäß Verfahrensschritt S9 in Fig. 1 kann desweiteren vorgeshen sein, dass nach Deaktivieren der charakteristischen Zugriffskennung eine weitere Überprüfung dahingehend durchgeführt wird, ob eine weitere, dem Dienst und/oder Datensatz zugeordnete Zugriffskennung vorhanden ist und diese der ersten, bereits deaktivierten Zugriffkennung übergeordnet ist.

Wird keine weitere Zugriffskennung erkannt, dann wird der Zugriff auf den Dienst und/oder Datensatz, der bereits der deaktivierten Zugriffskennung zugeordnet ist, gemäß Verfahrensschritt S4 freigegeben. Ist jedoch eine weitere Zugriffskennung vorhanden, die der ersten bereits deaktivierten Zugriffskennung übergeordnet ist, dann wird gemäß Verfahrensschritt S5 wiederum überprüft, ob diese übergeordnete Zugriffsordnung aktiviert oder deaktiviert ist. Nachfolgende Schritte werden dann analog zu dem bereits ausgeführten Verfahrensschritten durchgeführt.

Die Zuordnung von mehreren Zugriffskennungen zu einem Dienst und/oder Datensatz entsprechend einer Hierarchiestruktur unterliegt in der Anzahl keiner Beschränkung.

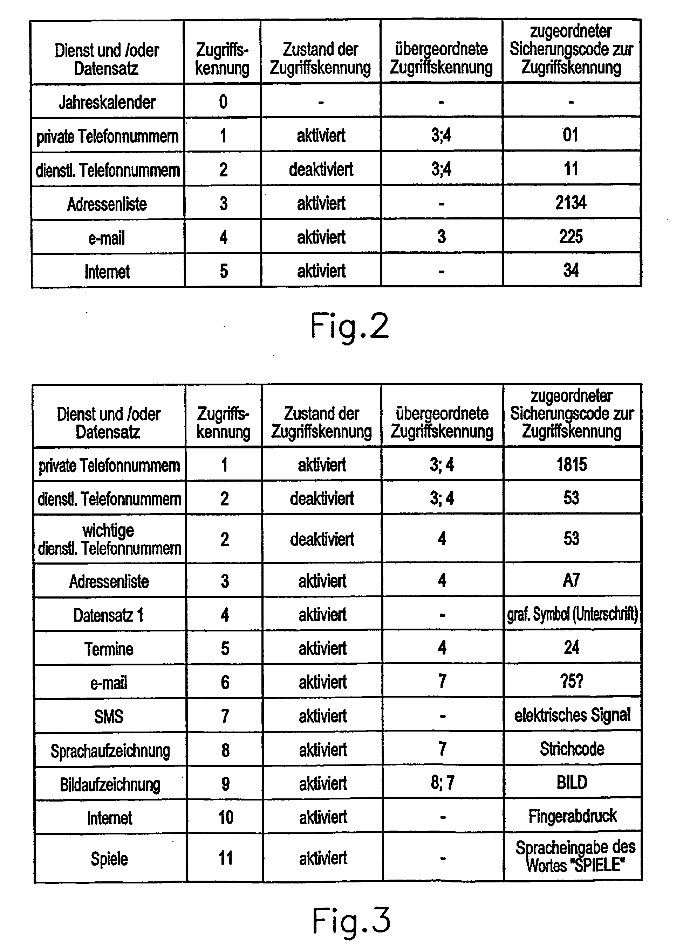

In Fig. 2 ist nachfolgend eine Tabelle eines ersten Ausführungsbeispiels einer Zuordnung von Zugriffskennungen und Sicherungscodes zu entsprechenden Diensten und/oder Datensätzen ausgeführt. Als Dienste werden dabei beispielsweise Internet und E-Mail bereitgestellt. Datensätze werden beispielsweise in Form einer privaten sowie einer dienstlichen Telefonnummernliste, einer Adressenliste und einem Jahreskalender dem berechtigten Nutzer bereitgestellt. Möchte ein Nutzer im Bereitschaftsmodus der Mobilstation den Datensatz des Jahreskalenders abrufen, so wird zunächst überprüft ob diesem Datensatz die spezielle Zugriffskennung zugeordnet ist. Die spezielle Zugriffskennung ist im Ausführungsbeispiel mit der Ziffer 0 ausgeführt. Es wird nun erkannt, dass dem Datensatz des Jahreskalenders die 0 als Zugriffskennung zugeordnet ist.

Dadurch ist der Jahreskalender jedem Nutzer freigegeben und kann von jedem Nutzer, auch von einem unberechtigten Nutzer abgerufen werden. Da die spezielle Zugriffskennungen keinen aktivierten oder deaktivierten Zustand aufweist, ist auch kein individueller Sicherungscode zugeordnet mittels den die spezielle Zugriffskennung aktiviert oder deaktiviert werden könnte. Desweiteren ist der Zugriffskennung 0 keine weitere Zugriffskennung übergeordnet, deren Zustand abgefragt werden müsste. Daher ist der Jahreskalender im Bereitschaftsmodus der Mobilstation von jedem Nutzer sofort zugänglich und kann abgerufen werden. Möchte ein Nutzer weiterhin auf den Datensatz der privaten Telefonnummern zugreifen, so wird zunächst die diesem Datensatz zugeordnete Zugriffskennung 1 erkannt. Da diese Zugriffskennung von der speziellen Zugriffskennung 0 abweicht, wird der Zustand der Zugriffskennung 1 überprüft.

Im Ausführungsbeispiel weist die Zugriffskennung 1 den aktivierten Zustand auf. Der Nutzer wird nun aufgefordert, den zugeordneten individuellen Sicherungscode 01, beispielsweise über eine Tastatur oder eine berührungssensitive Anzeigefläche einzugeben. Bei korrekter Eingabe wird die Zugriffskennung 1 in den deaktivierten Zustand gesetzt. Nachfolgend wird überprüft, ob der Zugriffskennung 1 eine weitere Zugriffskennung übergeordnet ist. Es wird dabei erkannt, dass sowohl die Zugriffskennung 3 als auch die Zugriffskennung 4 der Zugriffskennung 1 übergeordnet sind. Es wird nun überprüft, welchen Zustand die Zugriffskennungen 3 und 4 aufweisen. Sowohl die Zugriffskennung 3 als auch die Zugriffskennung 4 sind im aktivierten Zustand. Wiederum wird der Nutzer aufgefordert, die jeweils zugeordneten Sicherungscodes einzugeben. Durch die Eingabe des Sicherungscodes 2134 wird die Zugriffskennung 3 deaktiviert und durch die Eingabe des Sicherungscodes 225 wird die Zugriffskennung 4 deaktiviert. Unter der Voraussetzung der korrekten Eingabe der beiden Sicherungscodes für die Zugriffskennungen 3 und 4 wird nun der Zugriff auf den Datensatz der privaten Telefonnummern freigegeben.

Möchte ein Nutzer auf den Datensatz der dienstlichen Telefonnummern zugreifen, so wird zunächst die zugeordnete Zugriffskennung 2 erkannt. Diese Zugriffskennung 2 ist im deaktivierten Zustand, so dass der Nutzer keine Aufforderung erhält, den zugesicherten Sicherungscode 11 einzugeben, da kein Deaktivieren der Zugriffskennung 2 notwendig ist. Allerdings sind wiederum wie beim Datensatz der privaten Telefonnummern die Zugriffskennungen 3 und 4 übergeordnet. Ebenso wie beim Datensatz der privaten Telefonnummern müssen nun erst diese beiden Zugriffskennungen 3 und 4 deaktiviert werden, um einen Zugriff auf den Datensatz der dienstlichen Telefonnummern freizugeben. Gemäß der dargestellten Zuordnungstabelle muss für den Zugriff auf die Adressenliste die zugeordnete Zugriffskennung 3 deaktiviert werden. Dazu muss der zugeordnete Sicherungscode 2134 eingegeben werden.

Der Zugriffskennung 3 ist im Ausführungsbeispiel keine weitere Zugriffskennung zugeordnet. Für den Zugriff auf den E-Mail-Dienst wird die zugeordnete Zugriffskennung 4 durch Eingabe des zugeordneten Sicherungscodes 225 deaktiviert. Da der Zugriffskennung 4 die Zugriffskennung 3 übergeordnet ist und diese ebenfalls aktiviert ist, muss ebenfalls die Zugriffskennung 3 durch Eingabe des Sicherungscodes 2134 in die Mobilstation deaktiviert werden, um den Zugriff auf den E-Mail-Dienst freizugeben. Der Zugriff auf den Internetdienst ist im Ausführungsbeispiel sofort möglich. Die zugeordnete Zugriffskennung 5 ist deaktiviert und desweiteren ist ihr keine weitere Zugriffskennung übergeordnet.

In diesem Ausführungsbeispiel wurden sowohl die charakteristischen Zugriffskennungen als auch die übergeordneten Zugriffskennungen als auch die individuellen Sicherungscodes als Ziffern oder Ziffernkombinationen ausgeführt. Es kann auch vorgesehen sein, dass die charakteristischen Zugriffskennungen, die übergeordneten Zugriffskennungen und auch die Sicherungscodes ausschließlich als Sonderzeichen oder Sonderzeichenkombinationen oder ausschließlich durch Buchstaben oder Buchstabenkombinationen oder ausschließlich durch graphische Zeichen und/oder Symbole oder durch Kombinationen von graphischen Zeichen und/oder Symbolen ausgeführt sind.

Ein weiteres Ausführungsbeispiel einer Zuordnung von Zugriffskennungen und Sicherungskennungen zu Diensten und/oder Datensätzen ist in der Tabelle gemäß Fig. 3 dargestellt. Als Dienste und/oder Datensätze werden hier beispielsweise eine Liste mit privaten Telefonnummern, eine Liste mit dienstlichen Telefonnummern, eine Liste mit wichtigen dienstlichen Telefonnummern, eine Adressenliste, ein Datensatz, der alle vorab genannten Listen zusammenfasst, eine Terminliste, einen E-Mail-Dienst, einen SMS(Short Message Service)-Dienst, einen Sprachaufzeichnungsdienst, einen Bildaufzeichnungsdienst, einen Internetdienst sowie Spiele über die Mobilstation bereitgestellt.

Die Zugriffskennungen sind wiederum als Ziffern ausgeführt und den jeweiligen Diensten und/oder Datensätzen zugeordnet. Versucht ein Nutzer auf die Liste der privaten Telefonnummern zuzugreifen, wird erkannt, dass eine von der speziellen Zugriffskennung 0 abweichende Zugriffskennung 1 zugeordnet ist. Diese ist aktiviert und der Nutzer wird aufgefordert, den zugeordneten Sicherungscode 1815 über die Tastatur und/oder die berührungssensitive Anzeigefläche einzugeben. Nach korrekter Eingabe wird die Zugriffskennung 1 deaktiviert und es wird überprüft ob, und falls ja, welche Zugriffskennungen der Zugriffskennung 1 übergeordnet sind. Es wird dabei erkannt, dass die Zugriffskennungen 3 und 4 der Zugriffskennung 1 übergeordnet sind. Daher wird nachfolgend der Zustand dieser beiden Zugriffskennungen 3 und 4 überprüft und festgestellt, dass beide Zugriffskennungen aktiviert sind. Wiederum erfolgt eine Aufforderung an den Nutzer die individuellen Sicherungscodes, die diesen Zugriffskennungen 3 und 4 jeweils zugeordnet sind, einzugeben. Der Sicherungscode der der Zugriffskennung 3 zugeordnet ist, ist dabei als Ziffer und Buchstabenkombination A7 ausgeführt und wird über die Tastatur und/oder die berührungssensitive Anzeigefläche eingegeben. Die Zugriffskennung vier ist durch ein graphisches Symbol gesichert, das ebenfalls durch die Tastatur oder die berührungssensitive Anzeigefläche in die Mobilstation eingegeben wird. Das graphische Symbol kann auch als Schriftzug ausgeführt sein, beispielsweise eine Unterschrift des berechtigten Nutzers oder ein Polygonzug, der mittels eines Stiftes auf die berührungssensitive Anzeigefläche geschrieben wird. Sind nun die Sicherungscodes der Zugriffskennungen 3 und 4 korrekt eingegeben, so werden diese beiden Zugriffskennungen 3 und 4 deaktiviert und der Zugriff auf die private Telefonnummernliste wird freigegeben.

Beim Zugreifen auf den Datensatz der dienstlichen Telefonnummernliste wird erkannt, dass die Zugriffskennung 2 zugeordnet ist und diese im deaktivierten Zustand ist. Ein Deaktivieren durch Eingabe des Sicherungscodes 53 ist daher nicht erforderlich. Allerdings sind auf der Zugriffskennung 2 die Zugriffskennungen 3 und 4 übergeordnet, so dass auch hier wiederum die beiden Zugriffskennungen 3 und 4 durch Eingeben der zugehörigen Sicherungscodes deaktiviert werden müssen, damit der Zugriff auf den Datensatz der dienstlichen Telefonnummern freigegeben wird. Zusätzlich ist im Ausführungsbeispiel dem Datensatz der wichtigen dienstlichen Telefonnummern ebenfalls die Zugriffskennung 2 zugeordnet. Möchte ein Nutzer auf diesen Datensatz zugreifen, muss, wie aus der Tabelle in Figur 3 ersichtlich, die übergeordnete Zugriffskennung 4 deaktiviert werden, indem das graphische Symbol eingegeben wird. Ebenso erfolgt beim Zugreifen auf den Datensatz der Adressenliste ein Überprüfen der Zugriffskennung. Die zugeordnete Zugriffskennung 3 wird erkannt und durch korrekte Eingabe des zugeordneten Sicherungscodes A7 deaktiviert. Dadurch ist der Zugriff auf den Datensatz der Adressenliste freigegeben.

Greift ein Benutzer auf die in der Tabelle mit Datensatz 1 bezeichneten Daten zu, so wird zunächst die zugeordnete Zugriffskennung 4 im aktivierten Zustand erkannt. Durch Eingabe des zugeordneten Sicherungscodes, der als graphisches Symbol ausgeführt ist, wird der Zugriff auf den Datensatz freigegeben. Da unter dem Datensatz 1 die Datensätze der privaten Telefonnummern, der dienstlichen Telefonnummern, der wichtigen dienstlichen Telefonnummern, die Adressenliste sowie die Terminliste zusammengefasst sind, wird auch automatisch ein Zugreifen auf diese Datensätze möglich, so lange die diesen Datensätzen zugeordneten Zugriffskennungen deaktiviert sind. Im Ausführungsbeispiel wird mit dem Freigeben des Zugriffs auf den Datensatz 1 lediglich der Zugriff auf den Datensatz der wichtigen dienstlichen Telefonnummernliste freigegeben. Denn nur dieser Datensatz weist eine zugeordnete Zugriffskennung, nämlich die Zugriffskennung 2 auf, die deaktiviert ist.

Alle anderen Datensätze, die im Datensatz 1 zusammengefasst sind, weisen eine weitere übergeordnete Zugriffskennung auf, die aktiviert ist (dienstliche Telefonnummernliste mit aktivierter übergeordneter Zugriffskennung 3, private Telefonnummernliste mit aktivierter übergeordneter Zugriffskennung 3) oder weisen eine dem Datensatz zugeordnete Zugriffskennung auf, die aktiviert ist (private Telefonnummernliste mit aktiverter Zugriffskennung 1, Adressenliste mit aktivierter Zugriffskennung 3, Termine mit aktivierter Zugriffskennung 5).

Beim Zugreifen des Nutzers auf den Datensatz Termine wird erkannt, dass die zugeordnete Zugriffskennung 5 aktiviert ist. Durch Eingeben des Sicherungscodes 24 wird diese Zugriffskennung 5 deaktiviert und der Zugriff auf den Datensatz Termine wird erst dann freigegeben, wenn auch noch die Zugriffskennung 4 für den Datensatz 1 deaktiviert wird.

Möchte ein Nutzer den E-Mail-Dienst nutzen, so wird die zugeordnete Zugriffskennung 6 überprüft und der aktivierte Zustand dieser Zugriffskennung 6 erkannt. Nachdem der Nutzer aufgefordert wird, den zugeordneten Sicherungscode einzugeben und der Nutzer die Kombination ?5? korrekt eingibt, wird des weiteren überprüft, welche Zugriffskennungen dieser Zugriffskennung 6 übergeordnet sind. Dabei wird erkannt, dass als übergeordnete Zugriffskennung die Zugriffskennung 7 zugeordnet ist. Diese ist dem SMS-Dienst zugeordnet und weist den aktivierten Zustand auf. Dieser Zugriffskennung 7 ist als Sicherungscode ein elektrisches Signal zugeordnet, das drahtlos von einem tragbaren Transponder an einen Empfänger der Mobilstation übertragen wird. Durch Betätigen des Transponders wird das elektrische Signal an den Empfänger übertragen. Wird das Signal korrekt empfangen, wird die Zugriffskennung 7 deaktiviert und der Nutzer kann auf den E-Mail-Dienst zugreifen. Zugleich kann der Nutzer nun auch auf den SMS-Dienst zugreifen, denn der Zugriffskennung 7, die dem SMS-Dienst als charakteristische Zugriffskennung zugeordnet ist, ist keine weitere Zugriffskennung übergeordnet.

Beim Nutzen des Sprachaufzeichnungsdienstes durch den Nutzer wird wiederum, wie bei allen anderen anfänglichen Überprüfungen zunächst eine Überprüfung dahingehend durchgeführt, ob dem Dienst die spezielle Zugriffskennung zugeordnet ist. Auch beim Sprachaufzeichnungsdienst wird im Ausführungsbeispiel keine Zuordnung der speziellen Zugriffskennung 0 vorgenommen. Dem Sprachaufzeichnungsdienst wird die Zugriffskennung 8 zugeordnet, die im aktivierten Zustand erkannt wird. Durch Abtasten eines Strichcodes, mittels einer Scannervorrichtung wird die Zugriffskennung 8 deaktiviert. Es kann dabei vorgesehen sein, dass die Scannervorrichtung in der Mobilstation angeordnet ist oder extern angeordnet ist und mittels einer elektrischen Verbindung mit der Mobilstation verbunden ist. Wird der Strichcode als richtig erkannt, wird die Zugriffskennung 8 deaktiviert. Durch Übertragen des elektrischen Signals mittels des Transponders an einen Empfänger, der in der Mobilstation angeordnet ist, kann die, der Zugriffskennung 8 übergeordnete Zugriffskennung 7 deaktiviert werden und der Nutzer kann den nun freigegebenen Sprachaufzeichnungsdienst nutzen.

Dem Bildaufzeichnungsdienst ist die charakteristische Zugriffskennung 9 zugeordnet, die sich ebenfalls im aktivierten Zustand befindet. Durch Eingabe des Wortes "BILD" über die Tastatur oder die berührungssensitive Anzeigefläche, wird die Zugriffskennung 9 deaktiviert. Des Weiteren sind die der Zugriffskennung 9 übergeordneten Zugriffskennungen 7 und 8 entsprechend der bereits oben geschilderten Vorgehensweise zu deaktivieren. Wird das Deaktivieren der Zugriffskennungen 9, 7 und 8 korrekt ausgeführt, wird der Zugriff auf den Bildaufzeichnungsdienst freigegeben.

Möchte ein Nutzer einen Zugang zum Internet aufbauen, so wird zunächst die diesem Dienst zugeordnete Zugriffskennung 10 erkannt. Die im aktivierten Zustand befindliche Zugriffskennung 10 ist durch das biometrische Kennzeichen des Fingerabdrucks des berechtigten Nutzers gesichert. Indem der Nutzer die Finger auf die dafür vorgesehene Auflagefläche eines Fingerabdrucksensors legt, wird dieser Fingerabdruck überprüft und bei Berechtigung die Zugriffskennung 10 deaktiviert. Der Nutzer kann auf den Internetdienst zugreifen.

Als letzter Dienst wird dem Nutzer im Ausführungsbeispiel die Möglichkeit, Spiele zu nutzen, bereitgestellt. Die zugeordnete, charakteristische Zugriffskennung 11 ist im aktivierten Zustand und kann durch eine Spracheingabe des berechtigten Nutzers beispielsweise das Wort "Spiele", deaktiviert werden. Als Sicherungscode kann dabei das Worts selbst und/oder ein charakteristisches akustisches Merkmal der Stimme des berechtigten Nutzers mittels eines Sensors deaktiviert werden. Bei nachgewiesener Berechtigung wird die Zugriffskennung 11 deaktiviert und der Zugriff auf die Spiele freigegeben.

Es ist auch im zweiten Ausführungsbeispiel möglich, die jeweilige Zugriffskennung als Kombination von Sonderzeichen und/oder Buchstaben und/oder graphischen Zeichen und/oder Symbolen und/oder Ziffern zu kombinieren.

In beiden Ausführungsbeispielen wurde für die spezielle Zugriffskennung die Ziffer 0 gewählt. Es kann aber auch jede andere Ziffer oder Kombination von Ziffern und/oder Buchstaben und/oder Sonderzeichen und/oder graphischen Zeichen und/oder Symbolen für die spezielle Zugriffskennung vorgesehen sein.

Ebenso ist es möglich, dass allen Diensten und/oder Datensätzen eine übergeordnete Zugriffskennung zugeordnet wird und durch Deaktivieren dieser übergeordneten Zugriffskennung ein Zugriff auf alle bereitgestellten Dienste und/oder Datensätze möglich ist. Dies ist allerdings nur dann möglich, wenn die den jeweiligen Diensten und/oder Datensätzen individuell zugeordneten, charakteristischen Zugriffskennungen deaktiviert sind.

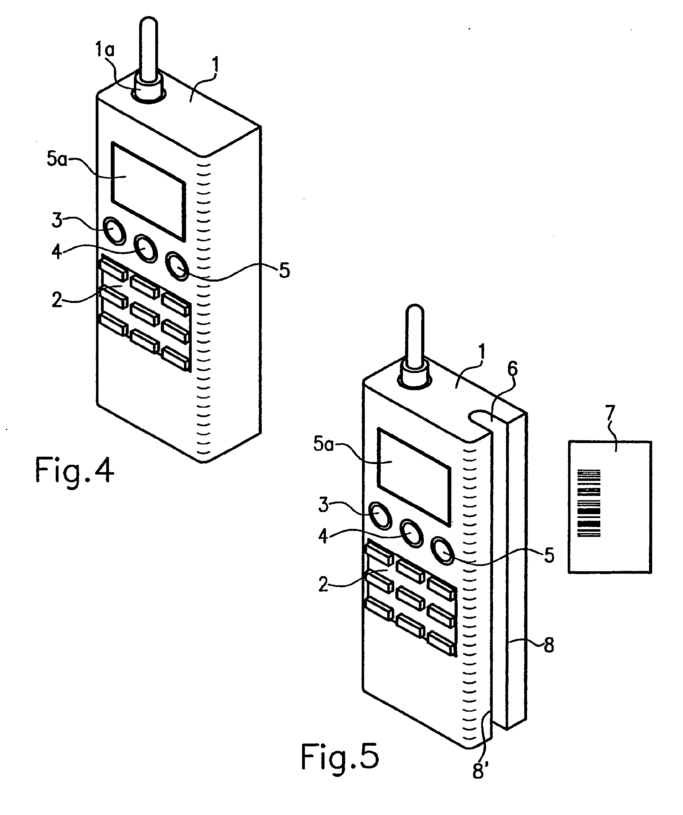

In Fig. 4 ist eine Mobilstation 1 dargestellt, die eine Tastatur 2 sowie berührungssensitive Anzeigeflächen 3, 4, 5 und 5a aufweist. Durch das manuelle Betätigen der Tasten der Tastatur 2 und/oder der berührungssensitiven Anzeigeflächen 3, 4, 5 und 5a mittels eines Fingers oder eines Stiftes kann der entsprechende Sicherungscode eingegeben werden.

In Fig. 5 ist ein weiteres Ausführungsbeispiel der Mobilstation 1 dargestellt. Die Mobilstation 1 weist dabei zusätzlich eine Scannervorrichtung 6 auf. Dadurch kann ein Strichcode oder ein Magnetcode auf einer Chipkarte 7 abgetastet werden, wenn ein Nutzer die Chipkarte durch die Führung 8 und 8' der Scannervorrichtung 6 sieht. Die Scannervorrichtung 6 ist im Ausführungsbeispiel an der Längsseite der Mobilstation 1 angeordnet, kann aber auch auf der kurzen Seite der Mobilstation 1 oder an anderer Stelle angeordnet sein. Die Mobilstation 1 kann auch derart ausgeführt sein, dass sie nur die Scannervorrichtung 6 und keine Tastatur 2 und/oder keine berührungssensitiven Anzeigeflächen 3, 4, 5 und 5a aufweist.

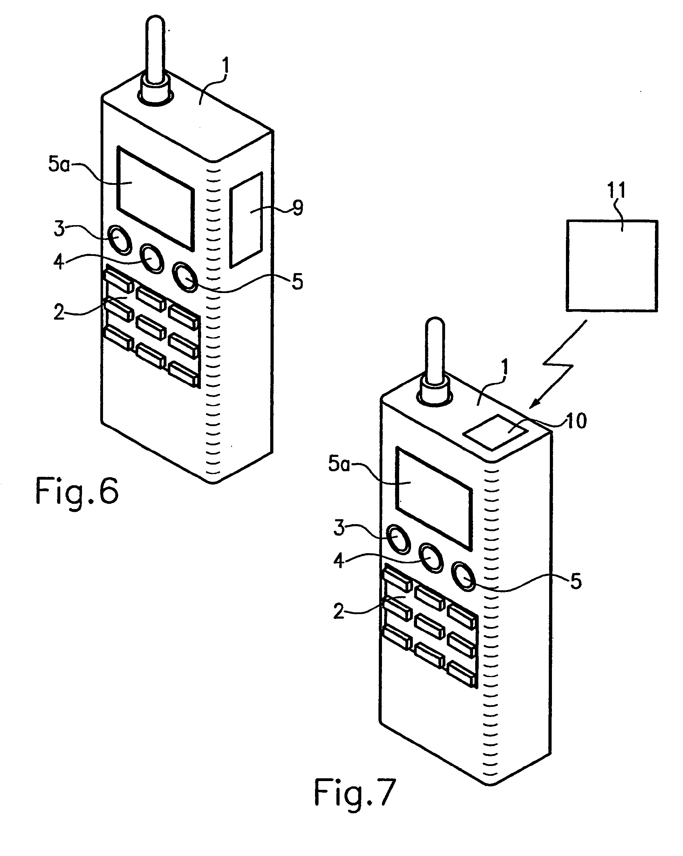

In Fig. 6 ist eine Mobilstation 1 gemäß Fig. 1 dargestellt, die zusätzlich einen Fingerabdrucksensor 9 aufweist. Der Fingerabdrucksensor 9 kann dabei an der Rückseite oder aber auch an der Vorderseite oder aber an den Schmalseiten der Mobilstation 1 angeordnet sein. Ebenso kann auch hier vorgesehen sein, dass die Mobilstation 1 lediglich mit dem Fingerabdrucksensor 9 und ohne die Tastatur 2 und/oder die berührungssensitiven Anzeigeflächen 3, 4, 5 und 5a ausgeführt ist.

Ein weiteres Ausführungsbeispiel der Mobilstation 1 ist in Fig. 7 dargestellt. Diese Mobilstation 1 weist einen Empfänger 10 auf, mit dem drahtlos übertragene elektrische Signale von einem tragbaren Transponder 11 empfangen werden können.

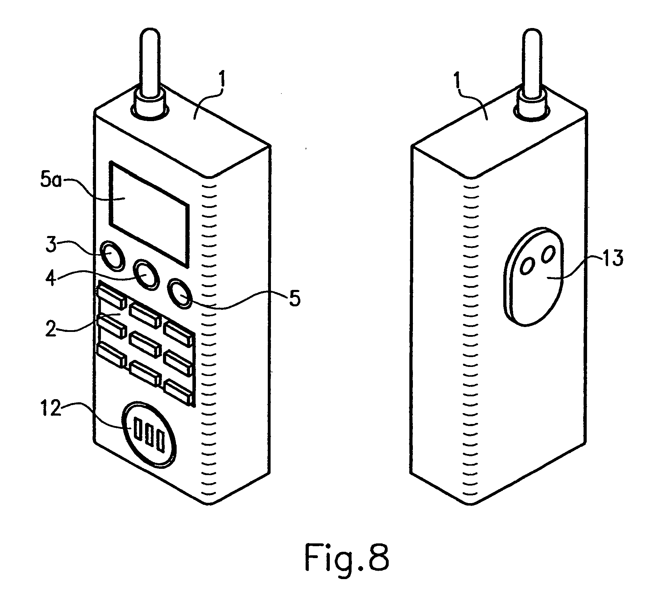

Des weiteren weist die in Fig. 8 dargestellte Mobilstation 1 zusätzlich zur Tastatur 2 und den berührungssensitiven Anzeigeflächen 3, 4, 5 und 5a einen Sensor 12 auf, mit dem Sprachsignale, die von einem Nutzer gesprochen werden, detektiert werden. Zusätzlich weist die Mobilstation 1 auch einen zweiten Sensor 13 auf, mit dem das Augenbild des Nutzers detektiert werden kann und der beispielsweise an der Rückseite der Mobilstation 1 angeordnet ist.

Bei allen Ausführungsbeispielen der Mobilstation 1 in den Fig. 4 bis 8 ist es möglich, dass die Mobilstation 1 sowohl jeweils nur ein Mittel zur Eingabe und/oder Übertragung des Sicherungscodes aufweist oder aber eine beliebige Kombination der dargestellten Mittel zur Eingabe und/oder Übertragung des Sicherungscodes aufweist.

Unter einer Mobilstation wird beispielsweise ein Mobiltelefon, ein Autotelefon, ein Satellitentelefon oder ein Satellitenfax verstanden.

Die aufgeführten Dienste und Datensätze sind als Beispiele zu sehen und können durch beliebige Dienste und/oder Datensätze, die einem Nutzer über die Mobilstation bereitgestellt werden können, erweitert oder ersetzt werden.

## Patentansprüche

1. Mobilstation (1) eines Mobilkommunikationssystems mit
- einer Sende- und Empfangseinheit (1a) zum Austauschen von Signalen mit einer oder mehreren zusätzlichen Mobilstationen und/oder mehreren Basisstationen,
- einer Mehrzahl von Diensten und/oder Datensätzen, die in einem Bereitschaftsmodus durch den Nutzer abrufbar sind, und
- einem Sicherungsmittel (2 - 5, 5a, 6, 9 - 13) für die Sperrung oder die Freigabe des Zugriffs auf den Dienst- und/oder Datensatz,
**gekennzeichnet durch**
- ein in die Mobilstation (1) einsetzbares Identifikationsmodul zum Überprüfen einer Nutzungsberechtigung und zum Aktivieren des Bereitschaftsmodus, und
- einer Anzahl verschiedener, charakteristischer und nichtbeschreibender Zugriffskennungen, die jeweils einem Dienst und/oder Datensatz zugeordnet und jeweils mit einem individuellen Sicherungscode gesichert sind, sodass **durch** Eingabe und/oder Übertragung des Sicherungscodes die Zugriffskennung aktivierbar oder deaktivierbar ist und somit der Zugriff auf den Dienst und/oder Datensatz gesperrt oder freigegeben ist.

2. Mobilstation (1) eines Mobilkommunikationssystems nach Anspruch 1,
**dadurch gekennzeichnet,**
- **dass** die Zugriffskennung eine oder mehrere Zahlen und/oder ein oder mehrere Buchstaben und/oder ein oder mehrere Sonderzeichen aufweist.

3. Mobilstation (1) eines Mobilkommunikationssystems nach einem der Ansprüche 1 oder 2,
**dadurch gekennzeichnet,**
- **dass** der Sicherungscode eine der nachfolgend aufgeführten Ausführungen oder eine beliebige Kombination der aufgeführten Ausführungen ist:
- ein PIN-code,
- ein Code aus alphanumerischen Zeichen,
- ein Code aus einem oder mehreren graphischen Symbolen und/oder einem oder mehreren graphischen Zeichen,
- ein biometrisches Merkmal eines berechtigten Nutzers, insbesondere ein Fingerabdruck und/oder ein Augenbild,
- ein akustisches Merkmal eines berechtigten Nutzers, insbesondere die gesprochene Sprache,
- ein drahtlos übertragenes, elektrisches Signal,
- ein Strichcode oder Magnetcode auf einer Identifikations- oder Chipkarte (7).

4. Mobilstation (1) eines Mobilkommunikationssystems nach einem der vorhergehenden Ansprüche,
**dadurch gekennzeichnet,**
- **dass** das Sicherungsmittel eine der aufgeführten Ausführungen oder eine beliebige Kombination der aufgeführten Ausführungen zur Eingabe und/oder Übertragung des in Anspruch 3 kombinierten Sicherungscodes ist:
- eine Tastatur (2),
- eine berührungssensitive Anzeigefläche (3, 4, 5, 5a), insbesondere ein Touchscreen oder ein Touchpad,
- ein Sensor, insbesondere ein Fingerabdrucksensor (9),
- ein zweiter Sensor (12) zum Detektieren eines akustischen Signals, insbesondere der gesprochenen Sprache,
- ein weiterer Sensor (13) zum Detektieren eines Augenbildes,
- ein tragbarer Transponder (11) und ein in der Mobilstation angeordneter Empfänger (10),
- eine Scannervorrichtung (6).

5. Mobilstation (1) eines Mobilkommunkationssystems nach einem der Ansprüche 1 bis 3,
**dadurch gekennzeichnet,**
- **dass** der Sicherungscode zum Aktivieren einer charakteristischen Zugriffskennung und der Sicherungscode zum Deaktivieren der charakteristischen Zugriffskennung unterschiedlich sind.

6. Mobilstation (1) eines Mobilkommunikationssystems nach einem der vorhergehenden Ansprüche,
**dadurch gekennzeichnet,**
- **dass** eine Zugriffskennung mehreren Diensten und/oder Datensätzen zugeordnet ist.

7. Mobilstation (1) eines Mobilkommunikationssystems nach einem der vorhergehenden Ansprüche,
**dadurch gekennzeichnet,**
- **dass** jedem Dienst und/oder Datensatz mehrere Zugriffskennungen entsprechend einer Hierarchiestruktur zugeordnet sind.

8. Mobilstation (1) eines Mobilkommunikationssystems nach einem der vorhergehenden Ansprüche,
**dadurch gekennzeichnet,**
- **dass** eine Zuordnung der charakteristischen Zugriffskennungen zu den Diensten und/oder Datensätzen und die zugeordnete Hierarchiestruktur der übergeordneten Zugriffskennungen vom berechtigten Nutzer veränderbar ist.

9. Mobilstation (1) eines Mobilkommunikationssystems nach einem der vorhergehenden Ansprüche,
**dadurch gekennzeichnet,**
- **dass** die den Diensten und/oder Datensätzen zugeordneten Zugriffskennungen und Sicherungscodes in der Mobilstation (1) und/oder im Identifikationsmodul (SIM) gespeichert oder verschlüsselt gespeichert sind.

10. Mobilstation (1) eines Mobilkommunikationssystems nach einem der vorhergehenden Ansprüche,
**dadurch gekennzeichnet,**
- **dass** die Mobilstation (1) einen Timer aufweist, der nach Ablauf einer festlegbaren Zeitdauer, innerhalb der keine Dienste und/oder Datensätze im Bereitschaftsmodus der Mobilstation von einem Nutzer abgefragt werden, Zugriffscodes automatisch aktiviert und die automatisch zu aktivierenden Zugriffscodes vom berechtigten Nutzer festlegbar sind.

11. Mobilstation (1) eines Mobilkommunikationssystems nach einem der vorhergehenden Ansprüche,
**dadurch gekennzeichnet,**
- **dass** bei zumindest einer aktivierten Zugriffskennung ankommende Verbindungen im Bereitschaftsmodus der Mobilstation (1) empfangbar sind.

12. Mobilstation (1) eines Mobilkommunikationssystems nach einem der vorhergehenden Ansprüche,
**dadurch gekennzeichnet,**
- **dass** die Dienste ein Internetzugang oder ein Mail-Zugang oder eine Telefonverbindung oder Spiele sind.

13. Mobilstation (1) eines Mobilkommunikationssystems nach einem der vorhergehenden Ansprüche,
**dadurch gekennzeichnet,**
- **dass** die Datensätze eine Adressenliste und/oder eine Telefonnummernliste und/oder Termine und/oder Texte und/oder Sprachaufzeichnungen und/oder Bildaufzeichnungen und/oder Internet oder WAP (Wireless Access Protocol) -Inhalte sind.

14. Verfahren zum Zugreifen auf einen Dienst und/oder einen Datensatz, die im Bereitschaftsmodus einer Mobilstation (1) bereitgestellt werden und von einem Nutzer abgerufen werden,
**dadurch gekennzeichnet,**
- **dass** zumindest einem Dienst und/oder Datensatz eine charakteristische nicht-beschreibende Zugriffskennung zugeordnet wird, die über einen Sicherungscode, der in Sicherungsmittel (2, 3, 4, 5, 5a, 6, 9, 10, 11, 12, 13) der Mobilstation (1) eingegeben und/oder übertragen wird, aktiviert oder deaktiviert wird und ein Zugriff auf den Dienst und/oder Datensatz gesperrt bzw. freigegeben wird.

15. Verfahren nach Anspruch 14,
**dadurch gekennzeichnet,**
- **dass** die Zugriffskennung aus einer oder mehreren Zahlen und/oder einem oder mehreren Buchstaben und/oder einem oder mehreren Sonderzeichen kombiniert wird.

16. Verfahren nach einem der Ansprüche 14 oder 15,
**dadurch gekennzeichnet,**
- **dass** als Sicherungscode eine der nachfolgenden Ausführungen oder eine beliebige Kombination der Ausführungen gewählt wird:
- ein PIN-code, der insbesondere zum Aktivieren des Bereitschaftsmodus der Mobilstation (1) eingegeben wird,
- ein Code aus alphanumerischen Zeichen,
- ein Code aus einem oder mehreren graphischen Symbolen und/oder einem oder mehreren graphischen Zeichen,
- ein biometrisches Merkmal eines berechtigten Nutzers, insbesondere ein Fingerabdruck und/oder ein Augenbild,
- ein akustisches Merkmal eines berechtigten Nutzers, ins besondere die gesprochene Sprache,
- ein drahtlos übertragenes, elektrisches Signal,
- ein Strichcode oder Magnetcode auf einer Identifikations
- oder Chipkarte (7).

17. Verfahren nach einem der Ansprüche 14 bis 16,
**dadurch gekennzeichnet,**
- **dass** der Sicherungscode mittels einem der nachfolgend aufgeführten Sicherungsmittel oder einer beliebigen Kombination der Sicherungsmittel eingegeben und/oder übertragen wird:
- eine Tastatur (2),
- eine berührungssensitive Anzeigefläche (3, 4, 5, 5a), insbe- sondere ein Touchscreen oder ein Touchpad,
- ein Sensor zum Detektieren biometrischer Merkmale, insbesondere ein Fingerabdrucksensor (9) oder ein Augenbildsensor (13),
- ein zweiter Sensor (12) zum Detektieren eines akustischen Merkmals, insbesondere der gesprochenen Sprache,
- ein tragbarer Transponder (11) und ein in der Mobilstation (1) angeordneter Empfänger (10),
- eine Scannervorrichtung (6).

18. Verfahren nach einem der Ansprüche 14 bis 16,
**dadurch gekennzeichnet,**
- **dass** zum Aktivieren einer charakteristischen Zugriffskennung und zum Deaktivieren dieser Zugriffskennung verschiedene Sicherungscodes verwendet werden.

19. Verfahren nach einem der vorhergehenden Ansprüche,
**dadurch gekennzeichnet,**
- **dass** einer Zugriffskennung mehrere Dienste und/oder Datensätze zugeordnet werden.

20. Verfahren nach einem der vorhergehenden Ansprüche,
**dadurch gekennzeichnet,**
- **dass** jedem Dienst und/oder Datensatz mehrere Zugriffskennungen zugeordnet werden.

21. Verfahren nach einem der vorhergehenden Ansprüche,
**dadurch gekennzeichnet,**
- **dass** eine Zuordnung der charakteristischen Zugriffskennungen zu den Diensten und/oder Datensätzen und eine zugeordnete Hierarchiestruktur von übergeordneten Zugriffskennungen zu charakteristischen Zugriffskennungen vom berechtigten Nutzer festgelegt werden.

22. Verfahren nach einem der vorhergehenden Ansprüche,
**dadurch gekennzeichnet,**
- **dass** die den Diensten und/oder Datensätzen zugeordneten Zugriffskennungen und Sicherungscodes in der Mobilstation
(1) und/oder im Identifikationsmodul (SIM) gespeichert oder verschlüsselt gespeichert werden.

23. Verfahren nach einem der vorhergehenden Ansprüche,
**dadurch gekennzeichnet,**
- **dass** mittels eines Timers eine Zeitdauer festgelegt wird, nach deren Ablauf Zugriffskennungen automatisch aktiviert werden, sobald innerhalb dieser Zeitdauer keine Dienste und/oder Datensätze von einem Nutzer abgefragt werden und die automatisch zu aktivierenden Zugriffskennungen vom berechtigten Nutzer vorab festgelegt werden.

24. Verfahren nach einem der vorhergehenden Ansprüche,
**dadurch gekennzeichnet,**
- **dass** bei zumindest einer aktivierten Zugriffskennung ankommende Verbindungen im Bereitschaftsmodus der Mobilstation (1) empfangen werden.

25. Verfahren nach einem der vorhergehenden Ansprüche,
**dadurch gekennzeichnet,**
- **dass** als Dienste Spiele und/oder ein Mail-Zugang und/oder ein Internetzugang und/oder eine Telefonverbindung bereitgestellt werden.

26. Verfahren nach einem der vorhergehenden Ansprüche,
**dadurch gekennzeichnet,**
- **dass** als Datensätze eine Adressenliste und/oder eine Telefonnummernliste und/oder Termine und/oder Texte und/oder Sprachaufzeichnungen und/oder Bildaufzeichnungen und/oder Internet- oder WAP-Inhalte bereitgestellt werden.

## Claims

1. Mobile station (1) in a mobile communication system having
- a transmission and reception unit (1a) for interchanging signals with one or more additional mobile stations and/or a plurality of base stations,
- a plurality of services and/or data records which can be retrieved in a standby mode by the user, and
- a security means (2 - 5, 5a, 6, 9 - 13) for disabling or enabling access to the service and/or data record,
**characterized by**
- an identification module which can be inserted into the mobile station (1) for the purpose of checking use authorization and for the purpose of activating the standby mode and
- a number of different, characteristic and non-descriptive access identifiers which are each associated with a service and/or data record and each protected by means of an individual security code, so that the security code can be input and/or transmitted in order to activate or deactivate the access identifier and hence to disable or enable access to the service and/or data record.

2. Mobile station (1) in a mobile communication system according to Claim 1,
**characterized**
- **in that** the access identifier has one or more numbers and/or one or more letters and/or one or more special characters.

3. Mobile station (1) in a mobile communication system according to either of Claims 1 and 2, **characterized**
- **in that** the security code is one of the variants listed below or any combination of the listed variants:
- a PIN code,
- a code comprising alphanumeric characters,
- a code comprising one or more graphical symbols and/or one or more graphical characters,
- a biometric feature of an authorized user, particularly a fingerprint and/or an image of the eye,
- an audio feature of an authorized user, particularly the spoken voice,
- a wirelessly transmitted, electrical signal,
- a bar code or magnetic code on an identification or chip card (7).

4. Mobile station (1) in a mobile communication system according to one of the preceding claims,
**characterized**
- **in that** the security means is one of the listed variants or any combination of the listed variants for inputting and/or transmitting the security code combined in Claim 3:
- a keypad (2),
- a touch-sensitive display panel (3, 4, 5, 5a), particularly a touchscreen or a touchpad,
- a sensor, particularly a fingerprint sensor (9),
- a second sensor (12) for detecting an audio signal, particularly the spoken voice,
- a further sensor (13) for detecting an image of the eye,
- a portable transponder (11) and a receiver (10) arranged in the mobile station,
- a scanner apparatus (6).

5. Mobile station (1) in a mobile communication system according to one of Claims 1 to 3,
**characterized**
- **in that** the security code for activating a characteristic access identifier and the security code for deactivating the characteristic access identifier are different.

6. Mobile station (1) in a mobile communication system according to one of the preceding claims,
**characterized**
- **in that** an access identifier is associated with a plurality of services and/or data records.

7. Mobile station (1) in a mobile communication system according to one of the preceding claims,
**characterized**
- **in that** each service and/or data record has a plurality of associated access identifiers in accordance with a hierarchic structure.

8. Mobile station (1) in a mobile communication system according to one of the preceding claims,
**characterized**
- **in that** an association between the characteristic access identifiers and the services and/or data records, and the associated hierarchic structure of the superordinate access identifiers, can be altered by the authorized user.

9. Mobile station (1) in a mobile communication system according to one of the preceding claims,
**characterized**
- **in that** the access identifiers and security codes associated with the services and/or data records are stored, or are stored in encrypted form, in the mobile station (1) and/or in the identification module (SIM).

10. Mobile station (1) in a mobile communication system according to one of the preceding claims,
**characterized**
- **in that** the mobile station (1) has a timer which, after the expiry of a stipulatable period of time
within which no services and/or data records are requested by a user in the mobile station's standby mode, automatically
activates access codes, and the access codes to be automatically activated can be stipulated by the authorized user.

11. Mobile station (1) in a mobile communication system according to one of the preceding claims,
**characterized**
- **in that** calls arriving when at least one access identifier has been activated can be received in the standby mode on the mobile station (1).

12. Mobile station (1) in a mobile communication system according to one of the preceding claims,
**characterized**
- **in that** the services are Internet access or e-mail access or a telephone call or games.

13. Mobile station (1) in a mobile communication system according to one of the preceding claims,
**characterized**
- **in that** the data records are an address list and/or a telephone number list and/or appointments and/or texts and/or voice recordings and/or image recordings and/or Internet or WAP (Wireless Access Protocol) contents.

14. Method for accessing a service and/or a data record which are provided in the standby mode on a mobile station (1) and are retrieved by a user,
**characterized**
- **in that** at least one service and/or data record is assigned a characteristic non-descriptive access identifier which is activated or deactivated using a security code which is input and/or transmitted into security means (2, 3, 4, 5, 5a, 6, 9, 10, 11, 12, 13) in the mobile station (1), and access to the service and/or data record is disabled or enabled.

15. Method according to Claim 14,
**characterized**
- **in that** the access identifier is combined from one or more numbers and/or one or more letters and/or one or more special characters.

16. Method according to either of Claims 14 and 15,
**characterized**
- **in that** the security code chosen is one of the variants below or any combination of the variants:
- a PIN code which is input particularly for the purpose of activating the standby mode on the mobile station (1),
- a code comprising alphanumeric characters,
- a code comprising one or more graphical symbols and/or one or more graphical characters,
- a biometric feature of an authorized user, particularly a fingerprint and/or an image of the eye,
- an audio feature of an authorized user, particularly the spoken voice,
- a wirelessly transmitted, electrical signal,
- a bar code or magnetic code on an identification or chip card (7)

17. Method according to one of Claims 14 to 16,
**characterized**
- **in that** the security code is input and/or transmitted using one of the security means listed below or any combination of the security means:
- a keypad (2),
- a touch-sensitive display panel (3, 4, 5, 5a), particularly a touchscreen or a touchpad,
- a sensor for detecting biometric features, particularly a fingerprint sensor (9) or an eye-image sensor (13),
- a second sensor (12) for detecting an audio feature, particularly the spoken voice,
- a portable transponder (11) and a receiver (10) arranged in the mobile station (1),
- a scanner apparatus (6).

18. Method according to one of Claims 14 to 16,
**characterized**
- **in that** a characteristic access identifier is activated and this access identifier is deactivated using different security codes.

19. Method according to one of the preceding claims,
**characterized**
- **in that** an access identifier is assigned a plurality of services and/or data records.

20. Method according to one of the preceding claims,
**characterized**
- **in that** each service and/or data record is assigned a plurality of access identifiers.

21. Method according to one of the preceding claims,
**characterized**
- **in that** an association between the characteristic access identifiers and the services and/or data records, and an associated hierarchic structure of superordinate access identifiers for characteristic access identifiers, are stipulated by the authorized user.

22. Method according to one of the preceding claims,
**characterized**
- **in that** the access identifiers and security codes associated with the services and/or data records are stored, or are stored in encrypted form, in the mobile station (1) and/or in the identification module (SIM).

23. Method according to one of the preceding claims,
**characterized**
- **in that** a timer is used to stipulate a period of time after the expiry of which access identifiers are automatically activated, as soon as no services and/or data records are requested by a user within this period of time, and the access identifiers to be automatically activated are stipulated by the authorized user in advance.

24. Method according to one of the preceding claims,
**characterized**
- **in that** call arriving when at least one access identifier has been activated are received in the standby mode on the mobile station (1).

25. Method according to one of the preceding claims,
**characterized**
- **in that** the services provided are games and/or e-mail access and/or Internet access and/or a telephone call.

26. Method according to one of the preceding claims,
**characterized**
- **in that** the data records provided are an address list and/or a telephone number list and/or appointments and/or texts and/or voice recordings and/or image recordings and/or Internet or WAP contents.

## Revendications

1. Station mobile (1) d'un système de communication mobile comprenant
- une unité d'émission et de réception (1a) pour l'échange de signaux avec une ou plusieurs stations mobiles supplémentaires et/ou plusieurs stations de base,
- une multiplicité de services et/ou d'ensembles de données qui peuvent être demandés par l'utilisateur dans un mode de disponibilité, et
- un moyen de sécurisation (2 à 5, 5a, 6, 9 à 13) pour l'interdiction ou l'autorisation de l'accès au service et/ou à l'ensemble de données,
**caractérisée par**
- un module d'identification utilisable dans la station mobile (1) et destiné à vérifier une autorisation d'utilisation et à activer le mode de disponibilité, et
- un certain nombre d'indicateurs d'accès, différents, caractéristiques et non descriptifs, qui sont associés à chaque fois à un service et/ou à un ensemble de données et qui sont sécurisés à chaque fois avec un code de sécurité individuel de telle sorte que l'indicateur d'accès est activable ou désactivable par l'entrée et/ou la transmission du code de sécurité et que l'accès au service et/ou à l'ensemble de données est ainsi interdit ou autorisé.

2. Station mobile (1) d'un système de communication selon la revendication 1,
**caractérisée par le fait que**
- l'indicateur d'accès comporte un ou plusieurs chiffres et/ou une ou plusieurs lettres et/ou un ou plusieurs caractères spéciaux.

3. Station mobile (1) d'un système de communication selon l'une des revendications 1 ou 2,
**caractérisée par le fait que**
- le code de sécurité est l'une des formes de réalisation énumérées ci-dessous ou une combinaison quelconque des formes de réalisation énumérées ci-dessous :
- un code PIN,
- un code constitué de caractères alphanumériques,
- un code constitué d'un ou plusieurs symboles graphiques et/ou d'un ou plusieurs caractères graphiques,
- une caractéristique biométrique d'un utilisateur autorisé, notamment une empreinte digitale et/ou une image de l'oeil,
- une caractéristique acoustique d'un utilisateur autorisé, notamment une parole prononcée,
- un signal électrique, transmis sans fil,
- un code-barres ou code magnétique sur une carte d'identification ou sur une carte à puce (7).

4. Station mobile (1) d'un système de communication mobile selon l'une des revendications précédentes,
**caractérisée par le fait que**
- le moyen de sécurisation est l'une des formes de réalisation énumérées ci-dessous ou une combinaison quelconque des formes de réalisation énumérées ci-dessous pour l'entrée et/ou la transmission du code de sécurité combiné dans la revendication 3 :
- un clavier (2),
- une surface d'affichage tactile (3, 4, 5, 5a), notamment un écran tactile ou un pavé tactile,
- un capteur, notamment un capteur d'empreintes digitales (9),
- un deuxième capteur (12) pour la détection d'un signal acoustique, notamment d'une parole prononcée,
- un autre capteur (13) pour la détection d'une image de l'oeil,
- un transpondeur portable (11) et un récepteur (10) installé dans la station mobile,
- un dispositif scanner (6).

5. Station mobile (1) d'un système de communication selon l'une des revendications 1 à 3,
**caractérisée par le fait que**
- le code de sécurité destiné à l'activation d'un indicateur d'accès caractéristique et le code de sécurité destiné à la désactivation de l'indicateur d'accès caractéristique sont différents.

6. Station mobile (1) d'un système de communication mobile selon l'une des revendications précédentes,
**caractérisée par le fait que**
- un indicateur d'accès est associé à plusieurs services et/ou ensembles de données.

7. Station mobile (1) d'un système de communication mobile selon l'une des revendications précédentes,
**caractérisée par le fait que**
- plusieurs indicateurs d'accès sont associés à chaque service et/ou ensemble de données conformément à une structure hiérarchique.

8. Station mobile (1) d'un système de communication mobile selon l'une des revendications précédentes,
**caractérisée par le fait que**
- une association des indicateurs d'accès caractéristiques aux services et/ou ensembles de données et la structure hiérarchique associée des indicateurs d'accès supérieurs sont modifiables par l'utilisateur autorisé.

9. Station mobile (1) d'un système de communication mobile selon l'une des revendications précédentes,
**caractérisée par le fait que**
- les indicateurs d'accès et codes de sécurité associés aux services et/ou ensembles de données sont mémorisés directement ou sous une forme cryptée dans la station mobile (1) et/ou dans le module d'identification (SIM).

10. Station mobile (1) d'un système de communication mobile selon l'une des revendications précédentes,
**caractérisée par le fait que**
- la station mobile (1) comporte un temporisateur qui, après l'expiration d'un délai spécifiable, dans les limites duquel aucun service et/ou ensemble de données n'a été demandé par un utilisateur dans le mode de disponibilité de la station mobile, active automatiquement des codes d'accès, les codes d'accès à activer automatiquement étant spécifiables par l'utilisateur autorisé.

11. Station mobile (1) d'un système de communication mobile selon l'une des revendications précédentes,
**caractérisée par le fait que**,
- pour au moins un indicateur d'accès activé, des liaisons entrantes peuvent être reçues dans le mode de disponibilité de la station mobile (1).

12. Station mobile (1) d'un système de communication mobile selon l'une des revendications précédentes,
**caractérisée par le fait que**
- les services sont un accès à Internet ou un accès au courrier électronique ou une liaison téléphonique ou des jeux.

13. Station mobile (1) d'un système de communication mobile selon l'une des revendications précédentes,
**caractérisée par le fait que**
- les ensembles de données sont une liste d'adresses et/ou une liste de numéros de téléphone et/ou des rendez-vous et/ou des textes et/ou des enregistrements vocaux et/ou des enregistrements vidéo et/ou des contenus Internet ou WAP (Wireless Access Protocol).

14. Procédé d'accès à un service et/ou à un ensemble de données qui sont mis à disposition dans un mode de disponibilité d'une station mobile (1) et qui sont demandés par un utilisateur,
**caractérisé par le fait que**
- il est associé au moins à un service et/ou ensemble de données un indicateur d'accès caractéristique non descriptif, qui est entré et/ou transmis par l'intermédiaire d'un code de sécurité dans des moyens de sécurisation (2, 3, 4, 5, 5a, 6, 9, 10, 11, 12, 13) de la station mobile (1), qui est activé ou désactivé et qui interdit ou autorise un accès au service et/ou à l'ensemble de données.

15. Procédé selon la revendication 14,
**caractérisé par le fait que**
- l'indicateur d'accès est combiné à partir d'un ou plusieurs chiffres et/ou d'une ou plusieurs lettres et/ou d'un ou plusieurs caractères spéciaux.

16. Procédé selon l'une des revendications 14 ou 15,
**caractérisé par le fait que**,
- comme code de sécurité, on choisit l'une des formes de réalisation énumérées ci-dessous ou une combinaison quelconque des formes de réalisation énumérées ci-dessous
- un code PIN, qui est entré notamment pour l'activation du mode de disponibilité de la station mobile (1),
- un code constitué de caractères alphanumériques,
- un code constitué d'un ou plusieurs symboles graphiques et/ou d'un ou plusieurs caractères graphiques,
- une caractéristique biométrique d'un utilisateur autorisé, notamment une empreinte digitale et/ou une image de l'oeil,
- une caractéristique acoustique d'un utilisateur autorisé, notamment une parole prononcée,
- un signal électrique, transmis sans fil,
- un code-barres ou code magnétique sur une carte d'identification ou sur une carte à puce (7).

17. Procédé selon l'une des revendications 14 à 16,
**caractérisé par le fait que**
- le code de sécurité est entré et/ou transmis au moyen de l'un des moyens de sécurisation énumérés ci-dessous ou d'une combinaison quelconque des moyens de sécurisation énumérés ci-dessous :
- un clavier (2),
- une surface d'affichage tactile (3, 4, 5, 5a), notamment un écran tactile ou un pavé tactile,
- un capteur pour la détection de caractéristiques biométriques, notamment un capteur d'empreintes digitales (9) ou un capteur d'images d'oeil (13),
- un deuxième capteur (12) pour la détection d'une caractéristique acoustique, notamment d'une parole prononcée,
- un transpondeur portable (11) et un récepteur (10) installé dans la station mobile (1),
- un dispositif scanner (6).

18. Procédé selon l'une des revendications 14 à 16,
**caractérisé par le fait que**,
- pour l'activation d'un indicateur d'accès caractéristique et pour la désactivation de cet indicateur d'accès, on utilise des codes de sécurité différents.

19. Procédé selon l'une des revendications précédentes,
**caractérisé par le fait que**
- plusieurs services et/ou ensembles de données sont associés à un indicateur d'accès.

20. Procédé selon l'une des revendications précédentes,
**caractérisé par le fait que**
- plusieurs indicateurs d'accès sont associés à chaque service et/ou ensemble de données.

21. Procédé selon l'une des revendications précédentes,
**caractérisé par le fait que**
- une association des indicateurs d'accès caractéristiques aux services et/ou ensembles de données et une structure hiérarchique associée d'indicateurs d'accès supérieurs comme indicateurs d'accès caractéristiques sont spécifiées par l'utilisateur autorisé.

22. Procédé selon l'une des revendications précédentes,
**caractérisé par le fait que**
- les indicateurs d'accès et codes de sécurité associés aux services et/ou ensembles de données sont mémorisés directement ou sous une forme cryptée dans la station mobile (1) et/ou dans le module d'identification (SIM).

23. Procédé selon l'une des revendications précédentes,
**caractérisé par le fait que**,
- au moyen d'un temporisateur, on spécifie un délai après l'expiration duquel des indicateurs d'accès sont automatiquement activés dès que, dans les limites de ce délai, aucun service et/ou ensemble de données n'a été demandé par un utilisateur, les indicateurs d'accès à activer automatiquement étant spécifiés au préalable par l'utilisateur autorisé.

24. Procédé selon l'une des revendications précédentes,
**caractérisé par le fait que**,
- pour au moins un indicateur d'accès activé, des liaisons entrantes sont reçues dans le mode de disponibilité de la station mobile (1).

25. Procédé selon l'une des revendications précédentes,
**caractérisé par le fait que**,
- comme services, on met à disposition des jeux et/ou un accès au courrier électronique et/ou un accès à Internet et/ou une liaison téléphonique.

26. Procédé selon l'une des revendications précédentes,
**caractérisé par le fait que**,
- comme ensembles de données, on met à disposition une liste d'adresses et/ou une liste de numéros de téléphone et/ou des rendez-vous et/ou des textes et/ou des enregistrements vocaux et/ou des enregistrements vidéo et/ou des contenus Internet ou WAP.
